# EUROPEAN PATENT APPLICATION

(11) **EP 2 611 008 A2**
(43) Date of publication of application: **03.07.2013**
(21) Application number: 12174671.3
(22) Date of filing: 02.07.2012
(51) Int. Cl.: H02K 19/10

(54) **Switched reluctance motor**

(30) Priority: 29.12.2011 KR 20110146299; 17.05.2012 KR 20120052610
(71) Applicant: Samsung Electro-Mechanics Co., Ltd, Suwon Gyunggi-do 443-743 (KR)
(72) Inventor: Lee, Sang Jong, 443-743 Gyunggi-do (KR); Bae, Han Kyung, 443-743 Gyunggi-do (KR); Yoon, Hee Soo, 443-743 Gyunggi-do (KR); Jang, Su Bong, 443-743 Gyunggi-do (KR)
(74) Representative: Heine, Christian Klaus

(57) **Abstract**

Disclosed herein is a switched reluctance motor including: a rotor part including a rotor core and rotor poles each formed to be protruded from the rotor core; and a stator part including a stator yoke rotatably receiving the rotor part therein and stator salient poles each formed to be protruded from the stator yoke so as to face the rotor poles, wherein a ratio of the number of stator salient poles to the number of rotor poles is (6 x n + 9):((6 x n + 9) + 1) or (6 x n + 9):((6 x n + 9) - 1), (n = 0, 1, 2...), (where n= 0, 1, 2...).

## Description

### BACKGROUND OF THE INVENTION

### 1. Technical Field

The present invention relates to a switched reluctance motor.

### 2. Description of the Related Art

Generally, a switched reluctance motor (hereinafter, referred to as an SR motor) is configured to include a rotor part and a stator part.

The rotor part includes a rotor core having a shaft coupled thereto and a plurality of rotor poles each formed to be protruded from the rotor core.

In addition, the stator part includes stator salient poles each formed to be protruded from a stator yoke so as to face the rotor pole.

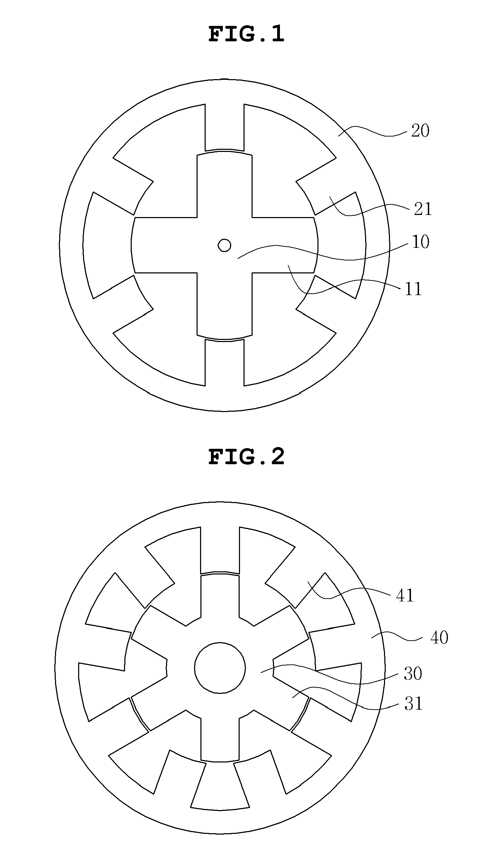

FIGS. 1 and 2 are views schematically showing a switched reluctance motor according to the prior art. As shown in FIG. 1, the number of rotor poles 11 formed to be protruded from a rotor core 10 is four, and the number of stator salient poles 21 formed to be protruded from a stator yoke 20 is six.

In addition, as shown in FIG. 2, the number of rotor poles 31 formed to be protruded from a rotor core 30 is six, and the number of stator salient poles 41 formed to be protruded from a stator yoke 40 is nine.

That is, the switch reluctance motor according to the prior art shown in FIGS. 1 and 2 is configured to have three phases, such that a ratio of the number of stator salient poles to the number of rotor poles is 3 x n:2 x n (where n = 1,2,3... a natural number).

Among ratios of the number of stator salient poles to the number of rotor poles, a ratio of 6:4 is most widely used.

However, since a general switched reluctance motor rotates by a reluctance torque between the rotor and the stator as described above, with this ratio of the number of stator salient poles to the number of rotor poles, a torque ripple is large due to characteristics of motor driving.

In addition, vibration and noise occur in the motor due to the large torque ripple.

### SUMMARY OF THE INVENTION

The present invention has been made in an effort to provide a switched reluctance motor in which a ratio of the number of stator salient poles to the number of rotor poles is (6 x n + 9):((6 x n + 9) + 1) or (6 x n + 9):((6 x n + 9) - 1), (where n= 0, 1, 2...).

According to a preferred embodiment of the present invention, there is provided a switched reluctance motor including: a rotor part including a rotor core and rotor poles each formed to be protruded from the rotor core; and a stator part including a stator yoke rotatably receiving the rotor part therein and stator salient poles each formed to be protruded from the stator yoke so as to face the rotor poles, wherein a ratio of the number of stator salient poles to the number of rotor poles is (6 x n + 9) : ((6 x n + 9) + 1), (where n= 0, 1, 2...).

The switched reluctance motor may further include another stator part coupled to a lower portion of the stator part and having the same number of stator salient poles as that of stator salient poles of the stator part.

The switched reluctance motor may further include another rotor part coupled to a lower portion of the rotor part and having the same number of rotor poles as that of rotor poles of the rotor part.

The switched reluctance motor may further include another rotor part coupled to a lower portion of the rotor part and having the same number of rotor poles as that of rotor poles of the rotor part and another stator part coupled to a lower portion of the stator part and having the same number of stator salient poles as that of stator salient poles of the stator part.

According to another preferred embodiment of the present invention, there is provided a switched reluctance motor including: a rotor part including a rotor core and rotor poles each formed to be protruded from the rotor core; and a stator part including a stator yoke received in the rotor part so that the rotor part is rotatable and stator salient poles each formed to be protruded from the stator yoke so as to face the rotor poles, wherein a ratio of the number of stator salient poles to the number of rotor poles is (6 x n + 9) : ((6 x n + 9) + 1), (where n= 0, 1, 2...).

According to still another preferred embodiment of the present invention, there is provided a switched reluctance motor including: a rotor part including a rotor core and rotor poles each formed to be protruded from the rotor core; and a stator part including a stator yoke rotatably receiving the rotor part therein and stator salient poles each formed to be protruded from the stator yoke so as to face the rotor poles, wherein a ratio of the number of stator salient poles to the number of rotor poles is (6 x n + 9) : ((6 x n + 9) - 1), (where n= 0, 1, 2...).

The switched reluctance motor may further include another stator part coupled to a lower portion of the stator part and having the same number of stator salient poles as that of stator salient poles of the stator part.

The switched reluctance motor may further include another rotor part coupled to a lower portion of the rotor part and having the same number of rotor poles as that of rotor poles of the rotor part.

The switched reluctance motor may further include another rotor part coupled to a lower portion of the rotor part and having the same number of rotor poles as that of rotor poles of the rotor part and another stator part coupled to a lower portion of the stator part and having the same number of stator salient poles as that of stator salient poles of the stator part.

According to still another preferred embodiment of the present invention, there is provided a switched reluctance motor including: a rotor part including a rotor core and rotor poles each formed to be protruded from the rotor core; and a stator part including a stator yoke received in the rotor part so that the rotor part is rotatable and stator salient poles each formed to be protruded from the stator yoke so as to face the rotor poles, wherein a ratio of the number of stator salient poles to the number of rotor poles is (6 x n + 9) : ((6 x n + 9) - 1), (where n= 0, 1, 2...).

### BRIEF DESCRIPTION OF THE DRAWINGS

FIG. 1 is a schematic plan view of a switched reluctance motor according to the prior art;
FIG. 2 is a schematic plan view of the switched reluctance motor according to the prior art;
FIG. 3 is a schematic plan view of a switched reluctance motor according to a preferred embodiment of the present invention; and
FIG. 4 is a schematic plan view of a switched reluctance motor according to another preferred embodiment of the present invention.

### DESCRIPTION OF THE PREFERRED EMBODIMENTS

Various objects, advantages and features of the invention will become apparent from the following description of embodiments with reference to the accompanying drawings. In the specification, in adding reference numerals to components throughout the drawings, it is to be noted that like reference numerals designate like components even though components are shown in different drawings. Further, terms used in the specification, 'first', 'second', etc. can be used to describe various components, but the components are not to be construed as being limited to the terms. The terms are only used to differentiate one component from other components. Further, when it is determined that the detailed description of the known art related to the present invention may obscure the gist of the present invention, the detailed description thereof will be omitted.

Various features and advantages of the present invention will be more obvious from the following description with reference to the accompanying drawings.

The terms and words used in the present specification and claims should not be interpreted as being limited to typical meanings or dictionary definitions, but should be interpreted as having meanings and concepts relevant to the technical scope of the present invention based on the rule according to which an inventor can appropriately define the concept of the term to describe most appropriately the best method he or she knows for carrying out the invention.

Hereinafter, preferred embodiments of the present invention will be described in detail with reference to the accompanying drawings.

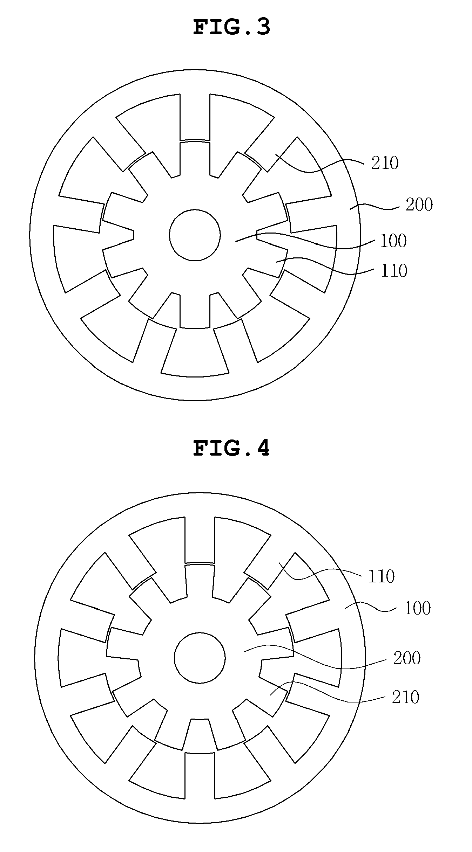

FIG. 3 is a schematic plan view of a switched reluctance motor according to a preferred embodiment of the present invention. As shown, the switched reluctance motor according to the preferred embodiment of the present invention is configured to include a rotor part and a stator part.

The rotor part includes a rotor core 100 and rotor poles 110 formed to be protruded from the rotor core 100.

In addition, another rotor part having the same number of rotor poles as that of rotor poles of the rotor part is coupled to a lower portion of the rotor part, such that one rotor part and another rotor part may be coupled in parallel with each other.

The stator part includes a stator yoke 200 and stator salient poles 210 formed to be protruded from the stator yoke 200.

In addition, another stator part having the same number of stator salient poles as that of stator salient poles of the stator part is coupled to a lower portion of the stator part, such that one stator part and another stator part may be coupled in parallel with each other.

A ratio between the numbers of stator salient poles 210 and rotor poles 110 configuring a switched reluctance motor according to a first preferred embodiment of the present invention may be (6 x n + 9):((6 x n + 9) + 1). Where n= 0, 1, 2...

Therefore, the numbers of each of the stator salient poles 210 and the rotor poles 110 according to the first preferred embodiment of the present invention are as shown in the following Table 1.

**[Table 1]**

| N | The Number of Stator Salient Poles | The Number of Rotor Pole |
|---|---|---|
| 0 | 9 | 10 |
| 1 | 15 | 16 |
| 2 | 21 | 22 |
| 3 | 27 | 28 |
| 4 | 33 | 34 |
| 5 | 39 | 40 |
| 6 | 45 | 46 |
| .. | .. | .. |

In addition, as described above, in the case of a two-parallel connection in which each of another stator part and another rotor part is additionally coupled to the rotor part 100 and the stator part 200, a ratio of the number of stator salient poles 210 to the number of rotor poles 110 is as shown in the following Table 2.

**[Table 2]**

| | Two-Parallel Connection | |
|---|---|---|
| N | The Number of Stator Salient Poles | The Number of Rotor Pole |
| 0 | 18 | 20 |
| 1 | 30 | 32 |
| 2 | 42 | 44 |
| 3 | 54 | 56 |
| 4 | 66 | 68 |
| 5 | 78 | 80 |
| 6 | 90 | 92 |
| .. | .. | .. |

Further, in the case of a three-parallel connection of the switched reluctance motor according to the first preferred embodiment of the present invention, a ratio of the number of stator salient poles 210 to the number of rotor poles 110 is as shown in the following Table 3.

**[Table 3]**

| | Three-Parallel Connection | |
|---|---|---|
| n | The Number of Stator Salient Poles | The Number of Rotor Poles |
| 0 | 27 | 30 |
| 1 | 45 | 48 |
| 2 | 63 | 66 |
| 3 | 81 | 84 |
| 4 | 99 | 102 |
| 5 | 117 | 120 |
| 6 | 135 | 138 |
| .. | .. | .. |

Therefore, the switched reluctance motor according to the first preferred embodiment of the present invention is configured so that the ratio of the number of stator salient poles 210 the number of rotor poles 110 is (6 x n + 9):((6 x n + 9) + 1), such that a torque ripple is reduced, thereby making it possible to reduce noise and vibration.

In addition, according to the first preferred embodiment of the present invention, as an n value is increased, the numbers of stator salient poles and rotor poles are increased, such that a torque ripple is further reduced.

In addition, a ratio between the numbers of stator salient poles 210 and rotor poles 110 configuring a switched reluctance motor according to a second preferred embodiment of the present invention may be (6 x n + 9):((6 x n + 9) - 1). Where n= 0, 1, 2...

Therefore, the numbers of each of the stator salient poles 210 and the rotor poles 110 according to the second preferred embodiment of the present invention are as shown in the following Table 4.

**[Table 4]**

| n | The Number of Stator Salient Poles | The Number of Rotor Poles |
|---|---|---|
| 0 | 9 | 8 |
| 1 | 15 | 14 |
| 2 | 21 | 20 |
| 3 | 27 | 26 |
| 4 | 33 | 32 |
| 5 | 39 | 38 |
| 6 | 45 | 44 |
| .. | .. | .. |

In addition, as described above, in the case of a two-parallel connection in which each of another stator part and another rotor part is additionally coupled to the rotor part 100 and the stator part 200, a ratio of the number of stator salient poles 210 to the number of rotor poles 110 is as shown in the following Table 5.

**[Table 5]**

| | Two-Parallel Connection | |
|---|---|---|
| n | The Number of Stator Salient Poles | The Number of Rotor Poles |
| 0 | 18 | 16 |
| 1 | 30 | 28 |
| 2 | 42 | 40 |
| 3 | 54 | 52 |
| 4 | 66 | 64 |
| 5 | 78 | 76 |
| 6 | 90 | 88 |
| .. | .. | .. |

Further, in the case of a three-parallel connection of the switched reluctance motor according to the second preferred embodiment of the present invention, a ratio of the number of stator salient poles 210 to the number of rotor poles 110 is as shown in the following Table 6.

**[Table 6]**

| | Three-Parallel Connection | |
|---|---|---|
| n | The Number of Stator Salient Poles | The Number of Rotor Poles |
| 0 | 27 | 24 |
| 1 | 45 | 42 |
| 2 | 63 | 60 |
| 3 | 81 | 78 |
| 4 | 99 | 96 |
| 5 | 117 | 114 |
| 6 | 135 | 132 |
| .. | .. | .. |

In the first and second preferred embodiments of the present invention, as shown in FIG. 3, the switched reluctance motor may have an inner rotor structure in which the rotor part is received in the stator part so that it is rotatable. In addition, as shown in FIG. 4, the switched reluctance motor may also have an outer rotor structure in which the rotor part receives the stator part therein so that it is rotatable.

As set forth above, according to the preferred embodiments of the present invention, a torque ripple in a reluctance torque generated between a rotor and a stator may be reduced.

In addition, the switched reluctance motor according to the preferred embodiments of the present invention has a low torque ripple, such that noise and vibration generated in the motor may be reduced.

Although the preferred embodiments of the present invention have been disclosed for illustrative purposes, they are for specifically explaining the present invention and thus a switched reluctance motor according to the present invention is not limited thereto, but those skilled in the art will appreciate that various modifications, additions and substitutions are possible, without departing from the scope and spirit of the invention as disclosed in the accompanying claims.

Accordingly, any and all modifications, variations or equivalent arrangements should be considered to be within the scope of the invention, and the detailed scope of the invention will be disclosed by the accompanying claims.

## Claims

1. A switched reluctance motor comprising:
a rotor part including a rotor core and rotor poles each formed to be protruded from the rotor core; and
a stator part including a stator yoke rotatably receiving the rotor part therein and stator salient poles each formed to be protruded from the stator yoke so as to face the rotor poles,
wherein a ratio of the number of stator salient poles to the number of rotor poles is (6 x n + 9) : ((6 x n + 9) + 1), (where n= 0, 1, 2...).

2. The switched reluctance motor as set forth in claim 1, further comprising another stator part coupled to a lower portion of the stator part and having the same number of stator salient poles as that of stator salient poles of the stator part.

3. The switched reluctance motor as set forth in claim 1, further comprising another rotor part coupled to a lower portion of the rotor part and having the same number of rotor poles as that of rotor poles of the rotor part.

4. The switched reluctance motor as set forth in claim 1, further comprising another rotor part coupled to a lower portion of the rotor part and having the same number of rotor poles as that of rotor poles of the rotor part and another stator part coupled to a lower portion of the stator part and having the same number of stator salient poles as that of stator salient poles of the stator part.

5. A switched reluctance motor comprising:
a rotor part including a rotor core and rotor poles each formed to be protruded from the rotor core; and
a stator part including a stator yoke received in the rotor part so that the rotor part is rotatable and stator salient poles each formed to be protruded from the stator yoke so as to face the rotor poles,
wherein a ratio of the number of stator salient poles to the number of rotor poles is (6 x n + 9) : ((6 x n + 9) + 1), (where n= 0, 1, 2...).

6. A switched reluctance motor comprising:
a rotor part including a rotor core and rotor poles each formed to be protruded from the rotor core; and
a stator part including a stator yoke rotatably receiving the rotor part therein and stator salient poles each formed to be protruded from the stator yoke so as to face the rotor poles,
wherein a ratio of the number of stator salient poles to the number of rotor poles is (6 x n + 9) : ((6 x n + 9) - 1), (where n= 0, 1, 2...).

7. The switched reluctance motor as set forth in claim 6, further comprising another stator part coupled to a lower portion of the stator part and having the same number of stator salient poles as that of stator salient poles of the stator part.

8. The switched reluctance motor as set forth in claim 6, further comprising another rotor part coupled to a lower portion of the rotor part and having the same number of rotor poles as that of rotor poles of the rotor part.

9. The switched reluctance motor as set forth in claim 6, further comprising another rotor part coupled to a lower portion of the rotor part and having the same number of rotor poles as that of rotor poles of the rotor part and another stator part coupled to a lower portion of the stator part and having the same number of stator salient poles as that of stator salient poles of the stator part.

10. A switched reluctance motor comprising:
a rotor part including a rotor core and rotor poles each formed to be protruded from the rotor core; and
a stator part including a stator yoke received in the rotor part so that the rotor part is rotatable and stator salient poles each formed to be protruded from the stator yoke so as to face the rotor poles,
wherein a ratio of the number of stator salient poles to the number of rotor poles is (6 x n + 9) : ((6 x n + 9) - 1), (where n= 0, 1, 2...).
